# EUROPEAN PATENT APPLICATION

(11) **EP 2 613 274 A1**
(43) Date of publication of application: **10.07.2013**
(21) Application number: 12192864.2
(22) Date of filing: 15.11.2012
(51) Int. Cl.: G06F 17/30

(54) **Apparatus and method of terminal using cloud systems**

(30) Priority: 04.01.2012 KR 20120000968
(71) Applicant: Samsung Electronics Co., Ltd., Suwon-si, Gyeonggi-do, 443-742 (KR)
(72) Inventor: Choi, Han-Sol, Seoul (KR)
(74) Representative: Harrison Goddard Foote LLP

(57) **Abstract**

An operating method of a terminal for using a cloud system is provided. The method includes transmitting file information of a particular file stored on the terminal, to a server, receiving a request for at least one of first data and second data of the particular file, from the server, and transmitting at least one of the first data and the second data to the server.

## Description

### BACKGROUND OF THE INVENTION

### 1. Field of the Invention:

The present invention relates to an operating method of a terminal for using a cloud system.

### 2. Description of the Related Art:

As the cloud computing technology advances, it is possible to store and receive files from a local client to a server and from the server to the local client. For example, without having to locally manage and store various files of large size, a user can store the file from the local client to the server using a cloud system. If necessary, the user can re-receive the file stored to the server.

The client can easily use the cloud system as discussed above, whereas the server handles a significant load associated with receiving and storing files from multiple clients, managing a number of files, and transmitting files back to the client. Hence, to efficiently manage the files in the server, the related art suggests a method that saves storage capacity of the server by mirroring the prestored file when the server receives the file from the client and storing the same file (e.g., the mirrored file) as the received file.

However, the method of mirroring the file prestored to the server recognizes the file as being same file (e.g., the mirrored file) only when the entire prestored file is copied. For example, when one file can be divided into user region data (e.g., metadata) and nonuser region data and when the user region data (e.g., metadata) arbitrarily modifiable by the user is different between two files, the server recognizes the files as being totally different files despite the nonuser region data (e.g., storing real sound resources or videos) being the same. Accordingly, in spite of the same nonuser region data containing a large amount of data, when merely the user region data including a small amount of data changes, the server recognizes it as the different file and thus a considerable load is put on the efficient management of the storage space of the server and the file transmission from the server to the client.

Therefore, a need exists for an apparatus and a method for saving a storage capacity of a server by, when a client divides a particular file into user region data and nonuser region data and transmits the file to the server, comparing the file with prestored data and mirroring the nonuser region data when the user region data alone differs.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for saving a storage capacity of a server by, when a client divides a particular file into user region data and nonuser region data and transmits the file to the server, comparing it with prestored data and mirroring the nonuser region data when the user region data alone differs.

Another aspect of the present invention is to provide an apparatus and a method for exerting less load on file transmission from a server to a client by individually managing user region data and nonuser region data in the server.

In accordance with an aspect of the present invention, a method of operating a terminal is provided. The method includes transmitting file information of a particular file stored on the terminal, to a server, receiving a request for at least one of first data and second data of the particular file, from the server, and transmitting at least one of the first data and the second data to the server.

In accordance with an aspect of the present invention, a method of operating a server for providing a cloud service is provided. The method includes requesting identification information of a particular file stored on a terminal, to the terminal and receiving the particular information from the terminal, determining whether first data and second data of the particular file are stored to the server, requesting at least one of the first data and the second data from the terminal, receiving at least one of the first data and the second data from the terminal, and storing the received at least one of the first data and the second data.

In accordance with an aspect of the present invention, an apparatus of a terminal is provided. The apparatus includes a control unit for controlling to receiving a request for identification information of a particular file from a server, and a communication module for transmitting the identification information to the server, for receiving a request for at least one of first data and second data of the particular file from the server, and for transmitting at least one of the first data and the second data to the server.

In accordance with an aspect of the present invention, an apparatus of a server is provided. The apparatus includes a communication unit for requesting identification information of a particular file stored on a terminal, from the terminal, and for receiving the identification information from the terminal, a determination unit for determining whether first data and second data of the particular file are stored to the server, and a storage unit for requesting at least one of the first data and the second data to the terminal, for receiving at least one of the first data and the second data from the terminal, and for storing the received at least one of the first data and the second data.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a diagram of file transmission and reception between a client and a server according to an exemplary embodiment of the present invention;

FIG. 2 is a flowchart of operations of a terminal using a cloud system according to an exemplary embodiment of the present invention;

FIG. 3 is a flowchart of operations of a server using a cloud system according to an exemplary embodiment of the present invention;

FIG. 4 is a block diagram of a terminal using a cloud system according to an exemplary embodiment of the present invention; and

FIG. 5 is a block diagram of a server using a cloud system according to an exemplary embodiment of the present invention.

Throughout the drawings, like reference numerals will be understood to refer to like parts, components, and structures.

### DETAILED DESCRIPTION OF THE EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

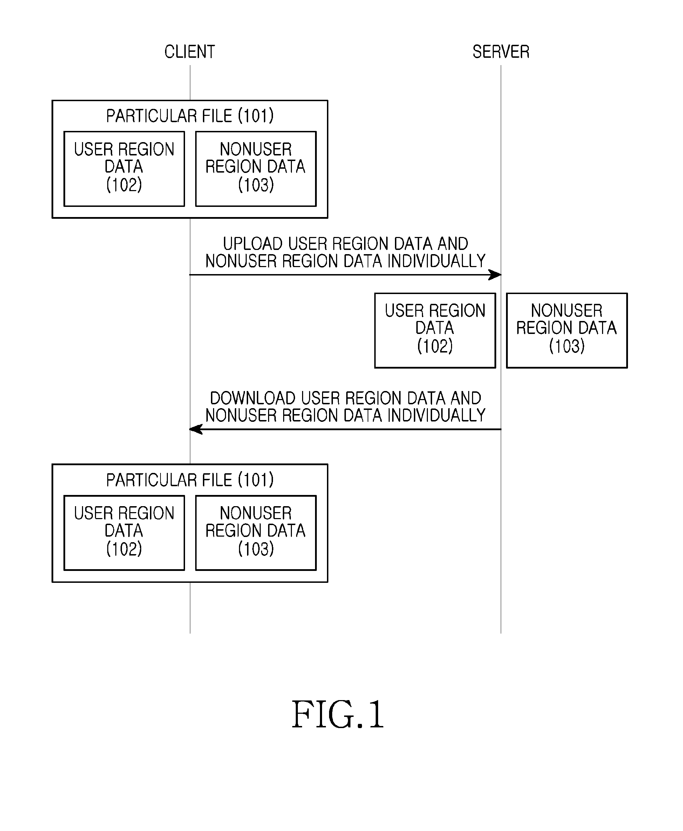

FIG. 1 depicts file transmission and reception between a client and a server according to an exemplary embodiment of the present invention.

Referring to FIG. 1, the client and the server transmit and receive a file using a cloud system. Herein, the cloud system is, for example, a technique for merging and providing resources of computers at different physical locations using virtualization. For example, the cloud system indicates a user-oriented computer environment for storing a program or a document, which is individually stored to a personal computer or a company server, to a large-scale computer (e.g., a server) accessible via Internet, and allowing an intended task by driving a necessary application such as web browser, using various terminals including the personal computer and a mobile terminal. As an example, the cloud system may offload some of the processing and storage requirements from a personal computer or other client terminal to a large-scale computer accessible via Internet. Hence, according to exemplary embodiments of the present invention, the client can transmit at least one file stored therein, to the server, download from the server the file transmitted to the server, and use the file downloaded from the client.

Herein, it is provided that a particular file 101 transmitted and received between the client and the server includes user region data 102 and nonuser region data 103. For example, a music file, a video file, and a photo file can be divided into the user region data 102, such as metadata, which can be arbitrarily changed by a user, and the nonuser region data 103, such as real music data, video data, and photo data, which cannot be arbitrarily changed by the user. More specifically, in the music file, the user can modify the user region data 102 such as composer, lyricist, singer, and title, and cannot modify the nonuser region data 103 containing the actual music data. Hereinafter, it is provided that the file includes the user region data 102 and the nonuser region data 103.

The particular file 101 is stored to the client. Herein, the particular file 101 is defined as one file including the user region data 102 and the nonuser region data 103 as mentioned above. While FIG. 1 depicts the music file, a video file and a photo file including the user region data 102 can be used besides the music file. In addition, exemplary embodiments of the present invention may include a particular file 101 of any file type which has the user region data 102 and the nonuser region 103. A representative user region data 102 is metadata. The user region data 102 such as metadata includes a small amount of data. By contrast, the nonuser region data 103 such as music data, video data, and photo data (but not necessarily limited thereto) includes a large amount of data relative to the user region data 102.

According to exemplary embodiments of the present invention, the client stores the particular file 101 to transmit to the server by checking ranges and locations of the user region data 102 and the nonuser region data 103. Next, to transmit the particular file 101 to the server, the client discriminates and transmits to the server the user region data 102 and the nonuser region data 103 by determining the ranges of the user region data 102 and the nonuser region data 103 which are prestored. For example, in the case in which the particular file 101 is a music file, the client transmits the music file by discrimiating to metadata and music data. In contrast, the related art transmits the metadata and the music data as a single file to the server. Therefore, according to the related art, when the user changes only the metadata in the server, the file containing the different metadata, which is stored to the server, is not recognized as the same file. However, according to an exemplary embodiment of the present invention, the user region data 102 and the nonuser region data 103 are separated and transmitted to the server, and the server individually manages the user region data 102 and the nonuser region data 103. Thus, when only the user region data 102 is changed and the server stores the same data of the nonuser region data 103, the server can mirror the same data and thus efficiently manage its storage capacity.

According to exemplary embodiments of the present invention, although it is not depicted in FIG. 1, before transmitting the particular file 101 to the server, the client may transmit particular information of the particular file 101 to the server. Herein, the particular information indicates file unique key information of a client device. In more detail, the particular information can include at least one of hash codes and Cyclic Redundancy Check (CRC) data. That is, the server can easily determine whether the file stored to the server is the same as the file transmitted from the client using the file unique key, without having to receive the particular file 101 from the client. For example, before receiving the particular file 101 from the client, the server receives the particular information of the particular file 101 and determines whether the file is the same as the file stored therein. More specifically, the server receives the file unique key information from the client device, determines whether the file is the same as its stored file, and requests at least one of the user region data 102 and the nonuser region data 103 to the client device. For example, when the user region data 102 is not stored to the server but the nonuser region data 103 is stored to the server, the server can simply request and receive only the data region data 102 to and from the client. For example, data received from other client can be mirrored for the nonuser region data 103 and thus the file stored to the server can be efficiently managed. Similarly, when the user region data 102 is stored to the server but the nonuser region data 103 is not stored to the server, the server simply requests and receives the nonuser region data 103 to and from the client. Advantageously, the efficiency of exemplary embodiments of the present invention is maximized when only the user region data 102 including the small amount of data is transmitted to the server, the nonuser region data 103 including the large amount of data is prestored to the server, and the nonuser region data 103 is mirrored without having to transmit it from the client to the server.

According to exemplary embodiments of the present invention, as above, the server can receive the file unique key from the client device, and request and receive at least one of the user region data 102 and the nonuser region data 103, which is not stored to the server, to and from the client. For example, because the server discriminates and manages the user region data 102 and the nonuser region data 103 respectively, the server determines whether it stores the same data as the nonuser region data 103 even when the user region data 102 alone is changed. When determining the sameness between the data being compared, the nonuser region data 103 stored to the server is mirrored to thus efficiently manage the storage capacity of the server.

Next, when the client wants to use the particular file 101 stored to the server, the client can receive the particular file 101 from the server. Because the user region data 102 and the nonuser region data 103 are distinguished in the server, the user region data 102 and the nonuser region data 103 are received respectively. Upon receiving the user region data 102 and the nonuser region data 103 from the server, the client combines the user region data 102 and the nonuser region data 103. Because the combined file corresponds to a single file, the client can perform various functions using the particular file 101.

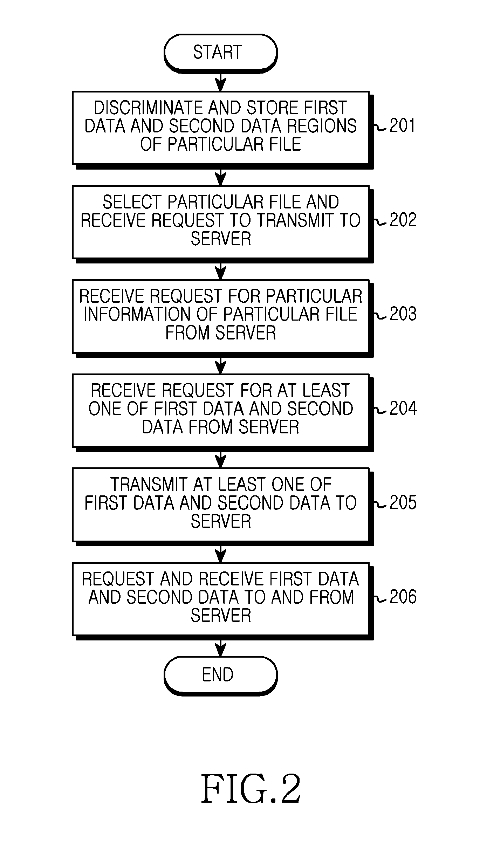

FIG. 2 is a flowchart of operations of a terminal using a cloud system according to an exemplary embodiment of the present invention.

Referring to FIG. 2, the terminal discriminates and stores first and second data regions of the particular file in step 201. For example, in detail, the terminal searches for the location of the first data and the location of the second data in one particular file and stores the searched locations. Herein, the first data indicates the user region data including the data modifiable by the user, and the second data indicates the nonuser region data including the data unmodifiable by the user. For example, in the music file, the video file, and the photo file, the first data corresponds to the data such as metadata which can be modified by the user and the second data respectively corresponds to the data such as music data, video data, and photo data which cannot be modified by the user. That is, the particular file includes a file including the first and second data regions. According to exemplary embodiments of the present invention, the particular file can be divided into the user region data and the nonuser region data and can apply a music file, a video file, and a photo file.

In step 202, the user selects the particular file and requests the terminal to transmit it to the server. For example, in more detail, when the user using the cloud system wants to transmit a particular file stored on his/her terminal to the server, the user selects the particular file to transmit. Next, the user can search for his/her file list stored on the server and determine whether the file is stored in duplicate on the server, which is optional. When confirming that the file to transmit to the server is not the file stored to the server, the user requests the terminal to transmit the selected particular file to the server.

In step 203, the terminal receives a request for the particular information of the particular file from the server. For example, in more detail, before the terminal transmits the particular file to the server, the server requests the particular information of the particular file from the terminal to determine whether the particular file is the same as the file stored to the server. As an example, the server can first receive the particular information of the particular file including the small amount of data and quickly determine whether the particular file is the same as the file stored to the server, rather than receiving the particular file including the large amount of data and thereafter determining whether the particular file is the same as the file stored to the server. As an example, according to exemplary embodiments the particular information indicates the file unique key of the terminal. For example, the file unique key can include at least one of the hash codes and the CRC data. According to exemplary embodiments of the present invention, the server can easily determine, using the file unique key, whether the file stored to the server is the same as the file to transmit from the terminal, without having to receive the particular file to be transmitted from the terminal. Thus, before transmitting the particular file to the server, the terminal is requested for the particular information of the particular file by the server.

In step 204, the server requests at least one of the first data and the second data to the terminal. More specifically, according to exemplary embodiments of the present invention, four cases can be considered as follows. First, the server requests only the first data from the terminal; for example, the server receives the particular information of the particular file, the same data as the second data is stored to the server, and the same data as the first data is not stored to the server according to the sameness comparison result with the file stored to the server. Second, the server requests only the second data from the terminal; for example, the server receives the particular information of the particular file, the same data as the first data is stored to the server, and the same data as the second data is not stored to the server according to the sameness comparison result with the file stored to the server. Third, the server requests both of the first data and the second data from the terminal; for example, the server receives the particular information of the particular file and the same data as the first data and the second data are stored to the server according to the sameness comparison result with the file stored to the server. Fourth, the server requests neither the first data nor the second data to the terminal; for example, the server receives the particular information of the particular file, none of the same data as the first data and the second data are stored to the server according to the sameness comparison result with the file stored to the server. According to exemplary embodiments of the present invention, it is advantageous that the server requests any one of the first data and the second data to the terminal. More advantageously, the server requests the first data including the small amount of data to the terminal. For example, when the second data including the large amount of data is stored to the server, the first data including the small amount of data modifiable by the user is not stored to the server, and the server requests only the first data, the server can save the storage capacity.

In step 205, the terminal, which receives a request from the server to transmit at least one of the first data and the second data, transmits the requested data to the server. For example, the terminal may transmit at least one of the first data and the second data in response to a request from the server for the terminal to transmit such corresponding data. According to exemplary embodiments of the present invention, as transmitting the particular file to the server, the terminal divides one particular file into the user region data and the nonuser region data. In a cloud system according to the related art, the terminal transmits the entire file to the server. As a result, even when only the user region data including the small amount of data is changed, the server, which stores the same file, cannot recognize the same file. However, according to exemplary embodiments of the present invention, the user region data and the nonuser region data is discriminated and transmitted from the terminal to the server. For example, the server individually manages the user region data and the nonuser region data. When only the user region data including the small amount of data is not stored to the server, the server can mirror the nonuser region data including the large amount of data and thus efficiently manage its storage space.

In step 206, the terminal requests and receives the first data and the second data to and from the server. More specifically, when the terminal intends to use the particular file transmitted to the server, the terminal re-requests the particular file transmitted to the server. Because the server stores the particular file as the first data and the second data separately, the terminal receives the first data and the second data respectively from the server. However, to utilize the particular file, the terminal needs to merge the first data and the second data back to the single file. Hence, once the terminal receives the first data and the second data from the server, and merges and stores the first data and the second data, the process is finished.

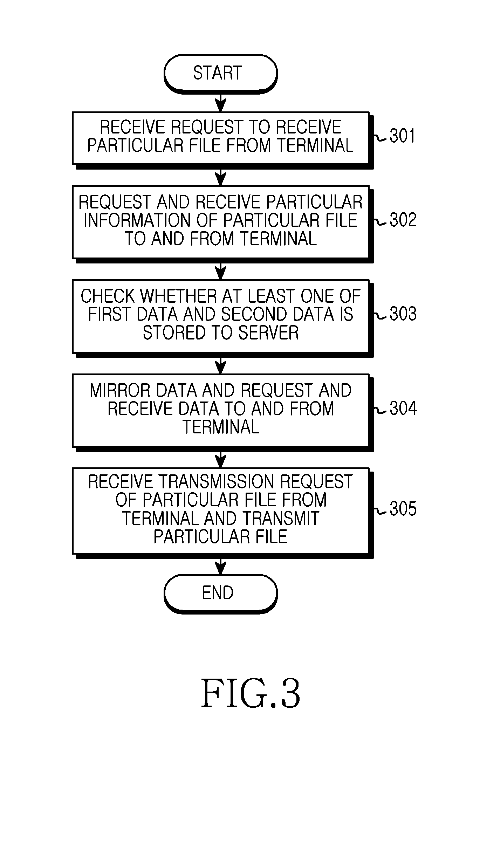

FIG. 3 is a flowchart of operations of a server using a cloud system according to an exemplary embodiment of the present invention.

Referring to FIG. 3, the server is requested to receive the particular file from the terminal in step 301. More specifically, the terminal using the cloud system transmits the particular file stored therein, to the server. That is, the server is requested to receive the particular file from the terminal. According to exemplary embodiments of the present invention, the particular file is defined, for example, as a file including user region data of data modifiable by the user and nonuser region data of data unmodifiable by the user.

The server, which is requested to receive the particular file from the terminal, requests and receives the particular information of the particular file from the terminal in step 302. For example, the server, which is requested to receive the particular file from the terminal, requests the particular information from the terminal, rather than immediately receiving the particular file stored to the terminal. That is, the server can first receive the particular information of the particular file including the small amount of data and quickly determine whether the particular file is the same as the file stored to the server, rather than receiving the particular file including the large amount of data and then determining whether the particular file is the same as the file stored to the server. For example, the particular information indicates the file unique key of the terminal. The file unique key can include at least one of the hash codes and the CRC data. According to exemplary embodiments of the present invention, the server can easily determine using the file unique key whether the file stored to the server is the same as the file to transmit from the terminal, without having to receive the particular file to transmit from the terminal. Thus, before transmitting the particular file to the server, the terminal is requested to transmit the particular information of the particular file by the server.

In step 303, the server determines whether at least one of the first data and the second data is stored to the server. More specifically, because the server can check the particular file by receiving the particular information of the particular file from the terminal, the server determines whether data received from other terminal is stored therein by analyzing the particular information. For example, by use of the cloud system, because the file, which is received from the other terminal and stored to the server, can be the same as the file requested by the terminal to receive, the server checks the sameness of the file. According to exemplary embodiments of the present invention, the first data corresponds to the user region data including the data modifiable by the user, and the second data corresponds to the nonuser region data including the data unmodifiable by the user. For example, in the music file, the video file, and the photo file, the first data corresponds to the data such as metadata which can be modified by the user, and the second data corresponds to the data such as music data, video data, and photo data which cannot be modified by the user. According to exemplary embodiments of the present invention, the particular file includes the file including the first and second data regions. As stated earlier, the particular file can be divided into the user region data and the nonuser region data, and can apply a music file, a video file, and a photo file.

In step 304, the server mirrors the data, requests the terminal to transmit data, and receives the data. More specifically, the server determines whether the first data and the second data are prestored, mirrors the stored data among the first data and the second data, and requests the terminal to transmit the data not stored. For example, among the first data and the second data to be transmitted by the terminal, when the first data is prestored to the server and the second data is not stored to the server, the server requests and receives the second data to and from the terminal and mirrors the first data stored therein. Among the first data and the second data to be transmitted by the terminal, when the first data is not stored to the server and the second data is stored to the server, the server requests and receives the first data to and from the terminal and mirrors the second data stored therein. According to exemplary embodiments of the present invention, when neither of the first data and the second data to be transmitted by the terminal are stored to the server, the server requests and receives both of the first data and the second data to and from the terminal. According to exemplary embodiments of the present invention, when both of the first data and the second data to be transmitted by the terminal are stored to the server, the server mirrors the stored first data and second data, without requesting both of the first data and the second data to the terminal.

In step 305, the server receives the transmission request of the particular file from the server and transmits the particular file. More specifically, the server storing the particular file by receiving from the terminal or mirroring at least one of the first data and the second data, receives the transmission request of the particular file from the server and transmits the particular file to the terminal. When receiving the particular file from the terminal, the server receives and manages the first data and the second data individually as aforementioned. Hence, when the server transmits the first data and the second data respectively to the terminal, the operations of the server using the cloud system is finished.

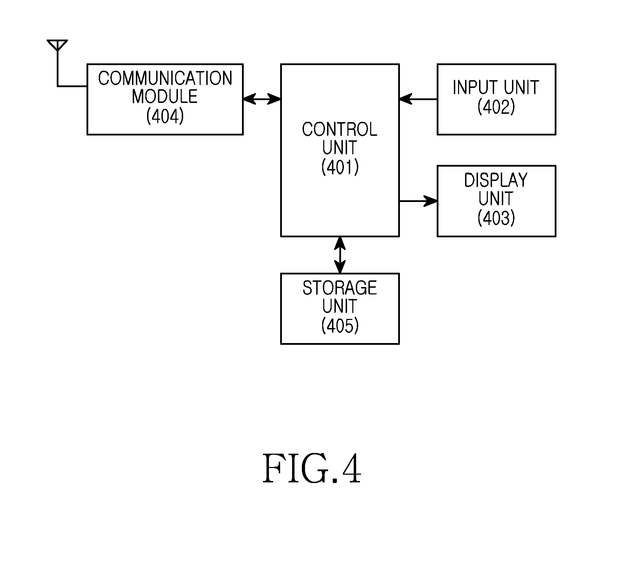

FIG. 4 is a block diagram of the terminal using the cloud system according to an exemplary embodiment of the present invention.

The terminal may be an electronic device such as, for example, a laptop, a smart phone, a net book, a mobile internet device, an ultra mobile PC, a tablet personal computer, a mobile telecommunication terminal, PDA having a camera and the like herein, just to name some of the possibilities.

Referring to FIG. 4, the terminal includes a control unit 401, an input unit 402, a display unit 403, a communication module 404, and a storage unit 405.

The control unit 401, which includes one or more processor, operatively controls the operations of the terminal. For example, the control unit 401 is requested for the particular information of the particular file by the server and requested to transmit the selected particular file to the server.

The input unit 402 provides input data generated by the user's selection to the control unit 401. For example, the user selects the particular file discriminated and stored.

The display unit 403 displays state information, a menu screen, and story information of the terminal under the control of the control unit 401. For example, the display unit 403 checks a file list stored to the server.

In fact, it is within the spirit and scope of the presently claimed invention that the input unit 108 and display unit 110 could all be served by a single touch screen. That is, a touch sensitive display, called as a touch screen, may be used as the display unit 110. In this situation, touch input may be performed via the touch sensitive display.

The communication module 404 processes signals transmitted and received by, for example, an antenna for voice and data communications. For example, the communication module 404 transmits the particular information to the server, receives the request for at least one of the first data and the second data of the particular file from the server, and transmits at least one of the first data and the second data to the server. The communication module 404 requests and receives the first data and the second data to and from the server.

The storage unit 405 can include a program storage unit storing a program to control the operations of the terminal, and a data storage unit for storing data generating in the program execution. For example, the storage unit 405 discriminates and stores the first and second data regions of the particular file, and merges and stores the received first data and second data.

According to exemplary embodiments of the present invention, the control unit 401 can process the functions of the terminal. The components are separately provided to distinguish their functions. Accordingly, in an actual product, the control unit 401 may process all or part of the functions of the terminal.

The method described above in relation with FIG. 4 under of the present invention may be provided as one or more instructions in one or more software modules stored in the storage unit 405. The software modules may be executed by the control unit 401.

According to the present invention, for example, an electronic device comprising one or more controller, the touch input device as the display unit 403, the storage unit 405 and one or software modules stored in the memory configured for execution by the controller, the software modules comprising one or more instruction to perform methods described through the specification as above or hereunder.

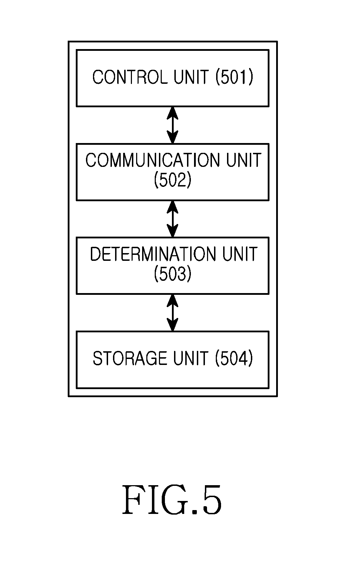

FIG. 5 is a block diagram of a server using a cloud system according to an exemplary embodiment of the present invention.

Referring to FIG. 5, the server can include a control unit 501, a communication unit 502, a determination unit 503, and a storage unit 504.

The control unit 501, which includes one or more processor, operatively controls the operations of the server. For example, the control unit 501 is requested to receive the particular file from the terminal. According to exemplary embodiments of the present invention, when the same data as the first data is stored and the same data as the second data is not stored, the control unit 501 mirrors the first data and requests the second data to the terminal. According to exemplary embodiments of the present invention, when the same data as the first data and the second data are not stored, the control unit 501 requests the first data and the second data to the terminal.

The communication module 502 processes signals transmitted and received for voice and data communications. For example, the communication module 502 requests the particular information of the particular file stored to the terminal, to the terminal and receives the particular information from the terminal. The communication module 502 receives the request for the first data and the second data from the terminal, and transmits the first data and the second data to the terminal.

The determination unit 503 determines whether the first data and the second data of the particular file are stored to the server, and determines whether the same data as the first data and the second data are stored in the data received from the other terminal.

According to exemplary embodiments of the present invention the storage unit 504 operatively requests at least one of the first data and the second data from the terminal, and receives and stores at least one of the first data and the second data from the terminal. According to exemplary embodiments of the present invention, a controller configured to operate with the storage unit 504 may request at least one of the first data and the second data from the terminal and upon receipt of such data, operatively store the at least one of the first data and the second data in the storage unit 504.

According to exemplary embodiments of the present invention, the control unit 501 can process the functions of the terminal. The components are separately provided to distinguish their functions. Accordingly, in an actual product, the control unit 501 may process all or part of the functions of the server.

The method described above in relation with FIG. 5 under of the present invention may be provided as one or more instructions in one or more software modules stored in the storage unit 504. The software modules may be executed by the control unit 501.

According to the present invention, for example, an electronic device comprising one or more controller, the storage unit 504 and one or software modules stored in the memory configured for execution by the controller, the software modules comprising one or more instruction to perform methods described through the specification as above or hereunder.

The units described herein may be implemented using hardware components and software components. For example, microphones, amplifiers, bandpass filters, audio to digital convertors, and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An operating method of a terminal, the method comprising:
transmitting file information of a particular file stored on the terminal, to a server;
receiving a request for at least one of first data and second data of the particular file, from the server; and
transmitting at least one of the first data and the second data to the server.

2. The operating method of claim 1, further comprising:
discriminating and storing regions of the first data and the second data of the particular file;
selecting the particular file discriminated and stored;
checking a file list stored to the server;
requesting to transmit the selected particular file to the server; and
receiving a request for the file information of the particular file from the server.

3. The operating method of claim 1, wherein the particular file comprises a file comprising the regions of the first data and the second data.

4. The operating method of claim 1, further comprising:
requesting the first data and the second data from the server;
receiving the first data and the second data from the server;
merging the received first data and second data; and
storing the merged received first data and second data.

5. The operating method of claim 1, wherein the first data comprises metadata modifiable by a user, and
wherein the second data comprises at least one of music data, photo data, and video data unmodifiable by the user.

6. The operating method of claim 1, wherein the file information comprises file unique key information of the terminal and wherein the file unique key comprises at least one of hash codes and Cyclic Redundancy Check (CRC) data.

7. An operating method of a server for providing a cloud service, the method comprising:
requesting identification information of a particular file stored on a terminal, to the terminal and receiving the particular information from the terminal;
determining whether first data and second data of the particular file are stored to the server;
requesting at least one of the first data and the second data from the terminal;
receiving at least one of the first data and the second data from the terminal; and
storing the received at least one of the first data and the second data.

8. The operating method of claim 7, wherein the requesting of at least one of the first data and the second data from the terminal comprises:
when the same data as the first data is stored and the same data as the second data is not stored, mirroring the first data and requesting the second data to the terminal.

9. The operating method of claim 7, wherein the requesting of at least one of the first data and the second data from the terminal comprises:
when the same data as the first data is not stored and the same data as the second data is stored, mirroring the second data and requesting the first data to the terminal.

10. The operating method of claim 7, wherein the requesting of at least one of the first data and the second data from the terminal comprises:
when the same data as the first data and the second data are not stored, requesting the first data and the second data from the terminal.

11. The operating method of claim 7, further comprising:
receiving a request for the stored first data and second data from the terminal; and
transmitting the first data and the second data to the terminal.

12. The operating method of any one of claims 7, wherein the first data comprises metadata modifiable by a user and wherein the second data comprises at least one of music data, photo data, and video data unmodifiable by the user.

13. The operating method of claim 7, wherein the identification information is file unique key information of the terminal and wherein the file unique key comprises at least one of hash codes and Cyclic Redundancy Check (CRC) data.

14. An apparatus of a portable terminal arranged to implement a method of one of claims 1 to 6.

15. An apparatus of a server arranged to implement a method of one of claims 7 to 13.
